# EUROPÄISCHE PATENTANMELDUNG

(11) **EP 4 498 463 A1**
(43) Veröffentlichungstag der Anmeldung: **29.01.2025**
(21) Anmeldenummer: 23188551.8
(22) Anmeldetag: 28.07.2023
(51) Int. Cl.: H01M 10/04, H01M 50/109, H01M 50/153, H01M 50/148, H01M 50/188, H01M 50/193, H01M 50/559

(54) **ELEKTROCHEMISCHES ENERGIESPEICHERELEMENT, INSBESONDERE IN FORM EINER KNOPFZELLE**

(71) Anmelder: VARTA Microbattery GmbH, 73479 Ellwangen Jagst (DE)
(72) Erfinder: Fischer, Claus-Christian, 73479 Ellwangen (DE); Kilibarda, Goran, 73525 Schwäbisch Gmünd (DE)
(74) Vertreter: Ostertag & Partner Patentanwälte mbB

(57) **Zusammenfassung**

Es wird ein elektrochemisches Energiespeicherelement (100), insbesondere in Form einer Knopfzelle, mit einem Gehäuse (10) und mit mindestens einem innerhalb des Gehäuses angeordneten Elektroden-Separator-Verbund (101) vorgeschlagen. Das Gehäuse des Energiespeicherelements umfasst ein becherförmiges Gehäuseteil (11) mit einer Öffnung sowie ein Deckelteil (12), das die Öffnung verschließt. Das Deckelteil (12) umfasst eine scheibenförmige Deckelplatte (13) mit einer Aussparung, die von einem Innenrand der Deckelplatte begrenzt wird, sowie eine metallische Polscheibe (14) mit einem Außenrand. Die Polscheibe (14) ist in der Aussparung der Deckelplatte (13) fixiert, wobei sich zwischen dem Außenrand der Polscheibe und dem Innenrand der Deckelplatte ein Spalt (15) befindet, der mit Klebstoff ausgefüllt ist. Vorzugsweise hat der Klebstoff elektrisch isolierende Eigenschaften.

## Beschreibung

Die vorliegende Erfindung betrifft ein elektrochemisches Energiespeicherelement, insbesondere in Form einer Knopfzelle, sowie ein Verfahren zur Herstellung eines solchen Energiespeicherelements.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Sie umfassen in der Regel mindestens eine Energiespeicherzelle mit einer positiven und einer negativen Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die mindestens eine elektrochemische Energiespeicherzelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann.

Die negative Elektrode und die positive Elektrode bei Energiespeicherelementen werden oftmals von sogenannten Kompositelektroden gebildet, die neben elektrochemisch aktiven Komponenten auch elektrochemisch inaktive Komponenten umfassen. Die Kompositelektroden werden oftmals mit einem oder mehreren Separatoren zu einem Verbundkörper kombiniert. Hierbei werden die Elektroden und Separatoren meist unter Druck, gegebenenfalls auch durch Lamination oder durch Verklebung, zu einem Verbundkörper miteinander verbunden. Die grundsätzliche Funktionsfähigkeit der Zelle kann durch Tränkung des Verbundes mit einem Elektrolyten hergestellt werden. Alternativ kann an Stelle eines mit einem Elektrolyten getränkten Separators auch ein Festkörperelektrolyt eingesetzt werden.

In vielen Ausführungsformen von Energiespeicherelementen wird der Verbundkörper in Form eines Wickels gebildet oder zu einem Wickel verarbeitet. In der Regel umfasst der Verbundkörper die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt. In anderen Ausführungsformen wird der Elektroden-Separator-Verbund von gestapelten Elektroden mit dazwischenliegenden Separatoren gebildet.

Energiespeicherelemente weisen oftmals eine zylindrische Bauform auf. Hierbei werden einerseits zylindrische Rundzellen und andererseits Knopfzellen voneinander unterschieden. Zylindrische Rundzellen zeichnen sich dadurch aus, dass ihre Höhe größer als ihr Durchmesser ist. Knopfzellen hingegen weisen eine Höhe auf, die kleiner als der Durchmesser ist.

Knopfzellen werden zum Teil in sehr kleinen Bauformen angeboten. Sie eignen sich beispielsweise zur Versorgung von kleinen elektronischen Geräten wie Uhren, Hörgeräten, kabellosen Kopfhörern oder Ähnlichem.

Knopfzellen weisen klassisch ein Gehäuse aus zwei Gehäusehalbteilen auf. Das eine Gehäusehalbteil bildet einen Zellenbecher und das andere Gehäusehalbteil bildet einen Zellendeckel. Diese Halbteile können beispielsweise aus vernickeltem Tiefziehblech als Stanzziehteile hergestellt werden.

Der flüssigkeitsdichte Verschluss bei Knopfzellen kann beispielsweise durch ein Umbördeln des Rands des Zellenbechers über den Rand des Zellendeckels in Verbindung mit einem Kunststoffring, der zwischen Zellenbecher und Zellendeckel angeordnet ist, vorgenommen werden. Der Kunststoffring dient als Dichtungselement und sorgt gleichzeitig für eine elektrische Isolierung zwischen dem Zellenbecher und dem Zellendeckel.

Andere Knopfzellen werden gefertigt, indem der Zellenbecher und der Zellendeckel in axialer Richtung durch eine ausschließlich oder primär kraftschlüssige Verbindung zusammengehalten werden. Dementsprechend müssen diese Zellen nicht zwingend einen gebördelten Becherrand aufweisen. Zur Abdichtung des Gehäuses und zur elektrischen Isolierung zwischen den Polen der Zelle ist zwischen dem Zellenbecher und dem Zellendeckel eine Dichtung vorgesehen, die beispielsweise von einer thermoplastischen Foliendichtung ausgebildet sein kann. Eine derartige Knopfzelle geht beispielsweise aus der DE 102009017514 A1 hervor. Bei dem in dieser beschriebenen Herstellungsverfahren wird auf den umgebogenen Rand eines Zellendeckels die Dichtung aufgebracht, und der Zellendeckel wird zusammen mit der Dichtung in den Zellenbecher eingeschoben.

Das Gehäuse derartiger Knopfzellen weist einen mehrlagigen Mantelbereich auf, in dem der Zellenbecher, die Dichtung und der Zellendeckel überlappen. Dies geht zwingend mit einer Beschränkung des verfügbaren Innenvolumens für die elektrochemisch aktiven Komponenten der Zelle einher.

Weiterhin sind Knopfzellen bekannt, bei denen ein Pol der Zelle durch eine der Stirnseiten des Gehäuses hindurchgeführt wird. Beispielsweise beschreibt die EP 3813171 A1 eine Knopfzelle, bei der eine Deckelplatte und das übrige metallische Gehäuse der Knopfzelle die gleiche Polarität aufweisen. Auf der Außenseite der Deckelplatte ist eine Kappe angeordnet, die die Deckelplatte überragt und die mittels eines Isoliermittels gegenüber der Deckelplatte elektrisch isoliert ist. Eine der Elektroden ist mit dem Metallgehäuse und die andere Elektrode ist mit der Kappe elektrisch kontaktiert. Die Kappe ist als gestielter Knopf realisiert, wobei der Stiel des Knopfes in eine Aussparung der Deckelplatte eingesetzt ist.

Die CN 106159350 A zeigt eine Knopfzelle, bei der in einer Deckelplatte des Gehäuses ein stielknopfartiger Pol eingesetzt ist, der mit dem Stiel in einer Aussparung der Deckelplatte sitzt und der nach innen und nach außen verbreitert ist.

Die EP 3920297 A1 beschreibt ebenfalls eine Knopfzelle mit einem Metallgehäuse und einer Poldurchführung. Der Pol wird von einem scheibenartigen Element gebildet, das auf der Fläche der Deckelplatte im Bereich einer Aussparung der Deckelplatte aufsitzt und über ein Isoliermittel von der Deckelplatte elektrisch getrennt ist.

### AUFGABE UND LÖSUNG

Demgegenüber stellt sich die Erfindung die Aufgabe, ein Energiespeicherelement und insbesondere eine Knopfzelle mit einer einfachen Bauart und einer besonders hohen Energiedichte bereitzustellen. Weiterhin soll dieses Energiespeicherelement in einfacher Weise an unterschiedliche Geometrien des Energiespeicherelements, beispielsweise im Hinblick auf unterschiedliche Ausbildungen der elektrochemisch aktiven Innenkomponenten des Energiespeicherelements und insbesondere auch im Hinblick auf die Anordnung der von außen abgreifbaren Pole des Energiespeicherelements, anpassbar sein.

Diese Aufgabe wird durch ein elektrochemisches Energiespeicherelement mit den Merkmalen des Anspruchs 1 gelöst. Vorteilhafte Ausgestaltungen des Energiespeicherelements ergeben sich aus den von Anspruch 1 abhängigen Ansprüchen. Weiterhin wird diese Aufgabe durch ein Verfahren zur Herstellung eines solchen Energiespeicherelements gemäß dem Anspruch 12 gelöst. Vorteilhafte Ausgestaltungen des Herstellungsverfahrens ergeben sich aus den weiteren abhängigen Ansprüchen.

Das erfindungsgemäße elektrochemisches Energiespeicherelement ist besonders bevorzugt in Form einer Knopfzelle ausgebildet. Das Energiespeicherelement umfasst entsprechend besonders bevorzugt ein Gehäuse, vorzugsweise ein zylindrisches Gehäuse, dessen Höhe kleiner als sein Durchmesser ist. Bevorzugt beträgt der Gehäusedurchmesser maximal 3 cm. Besonders bevorzugt ist der Gehäusedurchmesser < als 2 cm. Innerhalb des Gehäuses ist mindestens ein Elektroden-Separator-Verbund angeordnet. Dieser Elektroden-Separator-Verbund kann beispielsweise in Form eines zylindrischen Wickels, eines Flachwickels oder eines Stapels ausgebildet sein.

Das erfindungsgemäße elektrochemische Energiespeicherelement zeichnet sich durch die folgenden Merkmale aus:
a. Das Gehäuse umfasst ein becherförmiges Gehäuseteil mit einer Öffnung sowie ein Deckelteil, das die Öffnung verschließt. Das becherförmige Gehäuseteil ist bevorzugt aus einem metallischen Werkstoff gebildet.
b. Das Deckelteil umfasst
   i. eine scheibenförmige Deckelplatte mit einer Aussparung, die von einem Innenrand der Deckelplatte begrenzt wird, und
   ii. eine metallische Polscheibe mit einem Außenrand.
c. Die Polscheibe ist in der Aussparung der Deckelplatte fixiert und zwischen dem Außenrand der Polscheibe und dem Innenrand der Deckelplatte befindet sich ein Spalt, der mit einem Klebstoff ausgefüllt ist.

In vielen besonders bevorzugten Ausführungsformen hat der Klebstoff elektrisch isolierende Eigenschaften, insbesondere in ausgehärtetem Zustand.

Besonders bevorzugt ist, dass die metallische Polscheibe derart in der Aussparung der Deckelplatte fixiert ist, dass nur noch ein umlaufender Grenzbereich zwischen der Polscheibe und der Deckelplatte vorhanden ist. Im Vergleich zu herkömmlichen Lösungen wird bei der erfindungsgemäßen Lösung die Anzahl der Grenzflächen reduziert, wodurch ein einfach aufgebautes Deckelteil aus den genannten Komponenten gebildet wird. In bevorzugten Ausführungsformen sind die Elemente des Deckelteils in einer Ebene angeordnet, so dass vorteilhafterweise keine Vorsprünge nach außen oder innen bei dem Deckelteil vorhanden sind.

Das Deckelteil kann sehr dünn ausgebildet werden und eliminiert die Notwendigkeit eines mehrlagigen Mantelbereichs. Es hilft entsprechend dabei, Gehäuse mit optimiertem Innenvolumen bereitzustellen. Dieses größere Innenvolumen kann für mehr elektrochemisch aktives Material genutzt werden. Beispielsweise kann ein vergleichsweise größerer Elektroden-Separator-Verbund in die Zelle platziert werden.

Besonders bevorzugt ist die Fläche der Polscheibe kleiner als die von der Aussparung der Deckelplatte aufgespannte Fläche, so dass die Polscheibe in die Aussparung bei der Herstellung des Gehäuses des Energiespeicherelements einfach eingesetzt werden kann. Vorzugsweise ist auch die Länge des Außenrands der Polscheibe kleiner als die Länge des Innenrands der Deckelplatte.

Eine elektrische Isolierung der Polscheibe gegenüber dem übrigen Gehäuse und insbesondere gegenüber der Deckelplatte kann vorzugsweise durch den Klebstoff, mit dem die Polscheibe in der Aussparung der Deckelplatte fixiert ist, erreicht werden. Der Klebstoff erfüllt dann zum einen eine Befestigungsfunktion und zum anderen eine elektrische isolierende Funktion. Darüber hinaus hat der Klebstoff auch eine abdichtende Funktion.

Die Aussparung in der Deckelplatte, in die die Polscheibe eingesetzt ist, befindet sich vorzugsweise an zentraler Position der Deckelplatte, so dass sich die Polscheibe in der Mitte des Deckelteils befindet. Es ist jedoch auch möglich, dass die Aussparung dezentral in der Deckelplatte vorgesehen ist, so dass sich folglich die Polscheibe nicht im Zentrum des Deckelteils befindet.

Die scheibenförmige Deckelplatte ist bevorzugt aus einem metallischen Werkstoff, beispielsweise Aluminium oder vernickeltem Stahl, gebildet. Hierbei kann es in bevorzugten Ausführungsformen vorgesehen sein, dass in dem Energiespeicherelement die Deckelplatte die gleiche Polarität wie das becherförmige Gehäuseteil aufweist. Die Polscheibe kann also beispielsweise positiv gepolt sein, während die Deckelplatte und das becherförmige Gehäuseteil negativ gepolt sind. Dies hat den besonderen Vorteil, dass es hierdurch möglich ist, beide Polaritäten der Zelle, also die Polarität, die an der Polscheibe anliegt, und die andere Polarität, die an der metallischen Deckelplatte und gegebenenfalls auch an dem becherförmigen Gehäuseteile anliegt, auf einer Seite des Gehäuses, nämlich der Seite, wo sich die Deckelplatte befindet, abzugreifen.

Es ist aber auch möglich, dass die Deckelplatte selbst nicht aus einem metallischen Werkstoff, sondern beispielsweise aus Kunststoff, gebildet ist. In diesem Fall wird an der entsprechenden Seite des Gehäuses bevorzugt nur die Polarität der Polscheibe abgegriffen. Die andere Polarität des Energiespeicherelements kann über das becherförmige Gehäuseteil, beispielsweise am Boden des becherförmigen Gehäuseteils, abgegriffen werden.

Die metallische Polscheibe ist bevorzugt als scheibenförmige Platte ausgebildet. Besonders bevorzugt weist die als scheibenförmige Platte ausgebildete Polscheibe einen kreisförmigen Rand auf.

In bevorzugten Ausführungsformen weist die metallische Polscheibe über ihre gesamte Fläche eine gleichmäßige Dicke auf. In anderen Ausführungsformen kann es vorgesehen sein, dass die Polscheibe beispielsweise in einem Bereich, beispielsweise in ihrem mittleren Bereich, etwas dicker als in den äußeren Bereichen ist, so dass die Polscheibe eine Erhebung, insbesondere eine zentrale Erhebung, aufweist. Dies kann Vorteile im Hinblick auf das Abgreifen des Pols von außen bieten, da durch die Erhöhung auf der Polscheibe gegebenenfalls der Kontakt mit einem abgreifenden Mittel verbessert werden kann.

Ein besonderer Vorteil des erfindungsgemäßen Energiespeicherelements liegt also insbesondere darin, dass bei einer sehr einfachen und wenig störanfälligen Gehäusekonstruktion beide Pole des Energiespeicherelements auf einer Stirnseite des Gehäuses abgegriffen werden können.

In bevorzugten Ausführungsformen des erfindungsgemäßen elektrochemischen Energiespeicherelements ist mindestens eines der folgenden zusätzlichen Merkmale realisiert:
a. Der Außenrand der Polscheibe weist eine Kreisform auf.
b. Der Innenrand der Deckelplatte weist eine Kreisform auf.

Besonders bevorzugt sind die vorgenannten Merkmale a. und b. in Kombination miteinander realisiert, so dass die Form der Polscheibe und die Form der Aussparung in der Deckelplatte sich einander entsprechen. Die Kreisform beider Elemente ist dabei in besonders einfacher Weise zu realisieren. Gleichzeitig kann dabei ein umlaufender Klebstoffspalt realisiert werden, der über seinen gesamten Umfang eine gleichbleibende Breite aufweist.

Die Kreisform der Polscheibe und der Aussparung in der Deckelplatte hat darüber hinaus den Vorteil, dass bei dem Einsetzen der Polscheibe in die Aussparung der Deckelplatte die Orientierung der Polscheibe keine Rolle spielt. Die Fertigung der Deckelteils ist daher besonders einfach.

In weiteren besonders bevorzugten Ausgestaltungen zeichnet sich das erfindungsgemäße elektrochemische Energiespeicherelement durch mindestens eines der folgenden zusätzlichen Merkmale aus:
a. Der Außenrand der Polscheibe weist eine von einer Kreisform abweichende Form auf.
b. Der Innenrand der Deckelplatte weist eine von einer Kreisform abweichende Form auf.

Vorzugsweise sind die vorgenannten Merkmale a. und b. in Kombination miteinander verwirklicht.

Die von einer Kreisform abweichende Form kann beispielsweise so realisiert sein, dass bei einer runden oder ovalen Grundform Vorsprünge oder Einbuchtungen vorgesehen sind. Eine besonders bevorzugte, von der Kreisform abweichende Form ist eine Sternform.

Besonders bevorzugt ist es, wenn die Polscheibe und die Aussparung in der Deckelplatte einander entsprechende Formen aufweisen. Ein bevorzugtes Beispiel ist eine sternförmige Ausbildung sowohl der Polscheibe als auch der Aussparung.

Durch einander entsprechende Formen der Polscheibe und der Aussparung in der Deckelplatte können die Formen ineinandergreifen und der mit Klebstoff ausgefüllte Spalt kann eine gleichmäßige Breite aufweisen.

Durch eine von einer Kreisform abweichenden Formen der Polscheibe und/oder der Aussparung in der Deckelplatte wird eine Vergrößerung der Grenzfläche zwischen diesen beiden Elementen des Deckelteils bewirkt.

In ganz besonders bevorzugten Ausführungsformen sind die Form der Polscheibe und/oder die Form der Aussparung in der Deckelplatte derart gewählt, dass Einbuchtungen und/oder hinterschnittene Bereiche vorgesehen sind. Durch das Befüllen dieser Einbuchtungen und insbesondere der hinterschnittenen Bereiche mit Klebstoff wird eine besonders gute Fixierung der Polscheibe in der Deckelplatte erreicht.

Insgesamt kann durch eine von einer Kreisform abweichenden Formen die Stabilität der Deckelplatte verbessert werden. Weiterhin kann durch eine von einer Kreisform abweichende Form der Polscheibe und/oder der Aussparung der Deckelplatte erreicht werden, dass eine Lunker-Bildung, die bei einer Erstarrung des Klebstoffs entstehen kann, entgegengewirkt wird, so dass eine Hohlraumbildung bei der Erstarrung des Klebstoffs vermieden wird.

In besonders bevorzugten Ausgestaltungen zeichnet sich das erfindungsgemäße Energiespeicherelement durch das folgende zusätzliche Merkmal aus:
a. Auf der Außenseite des Deckelteils ist der Übergang von der Deckelplatte zu der Polscheibe fließend.

Mit einem "fließenden Übergang" ist gemeint, dass es auf besagter Außenseite im Bereich des Übergangs keine Stufen oder Absätze gibt. Bevorzugt ist die Außenseite des Deckelteils plan und weist keine Erhebungen auf. Besonders bevorzugt weist das Deckelteil im Bereich der Deckelplatte, im Bereich der Polscheibe und im Bereich des mit dem Klebstoff ausgefüllten Spalts eine im wesentlichen gleichmäßige Dicke auf.

Durch den fließenden Übergang auf der Außenseite des Gehäuses wird eine besonders einfache Geometrie der gesamten Knopfzelle erreicht, die für verschiedene Anwendungen besonders vorteilhaft ist.

Bevorzugt weisen die Deckelplatte und die Polscheibe eine im Wesentlichen gleiche Dicke auf. Die beiden Elemente des Deckelteils liegen bevorzugt in einer Ebene, wobei gemäß dieser bevorzugten Ausführungsform die äußere Fläche des Deckelteils eine plane oder ebene Oberfläche bildet.

In bevorzugten Ausführungsformen ist bei dem erfindungsgemäßen Energiespeicherelement das folgende zusätzliche Merkmal vorgesehen:
a. Auf der Innenseite des Deckelteils ist der Übergang von der Deckelplatte zu der Polscheibe fließend.

Durch diese Maßnahme wird das zur Verfügung stehende Innenvolumen des Gehäuses maximiert.

In besonders bevorzugten Ausführungsformen ist sowohl auf der Innenseite des Deckelteils als auch auf der Außenseite des Deckelteils der Übergang von der Deckelplatte zu der Polscheibe fließend.

Insgesamt kann das Deckelteil sehr dünn gestaltet werden, wodurch auf der einen Seite das zur Verfügung stehende Innenvolumen des Energiespeicherelements erhöht wird und auf der anderen Seite insgesamt das Gewicht des Energiespeicherelements durch den verringerten Materialbedarf für das Gehäuse im Vergleich mit herkömmlichen Lösungen reduziert wird.

In besonders bevorzugten Ausführungsformen des Energiespeicherelements ist das folgende zusätzliche Merkmal vorgesehen:
a. Die Innenseite des Deckelteils ist zumindest teilweise mit einer Folie, insbesondere mit einer Kunststofffolie, bedeckt, insbesondere abgeklebt.

Durch die Folie kann der Klebstoff in dem Spalt zwischen der Polscheibe und der Deckelplatte vor einem Kontakt mit einem Elektrolyten im Inneren des Energiespeicherelements geschützt werden.

In besonders vorteilhaften Ausgestaltungen kann vorzugsweise mindestens eines der folgenden zusätzlichen Merkmale vorgesehen sein:
a. Die Folie deckt den Innenrand der Deckelplatte und den Außenrand der Polscheibe ab, so dass der in dem Spalt zwischen dem Innenrand und dem Außenrand angeordnete Klebstoff vor einem Kontakt mit einem Elektrolyten im Inneren des Gehäuses geschützt ist.
b. Die Folie hat eine Ringform, insbesondere eine O-Ringform.

Vorzugsweise sind die vorgenannten Merkmale a. und b. in Kombination miteinander realisiert.

Bei der Folie kann es sich beispielsweise um eine Kaptonfolie handeln.

Im Hinblick auf den Klebstoff in dem Spalt zwischen der Deckelplatte und der Polscheibe zeichnet sich das erfindungsgemäße Energiespeicherelement in bevorzugten Ausführungsformen insbesondere durch mindestens eines der folgenden zusätzlichen Merkmale aus:
a. Der Klebstoff ist ein Epoxidharz.
b. Der Klebstoff ist ein Acrylatkleber.
c. Der Klebstoff ist ein Cyanacrylatkleber.
d. Der Klebstoff ist ein Zweikomponentenkleber.

Prinzipiell eignen sich alle Klebstoffe, die zum einen eine ausreichende Haftung zu den Bauteilen des Deckelteils aufweisen. Bevorzugt besitzt der Klebstoff geeignete abdichtende und elektrisch isolierende Eigenschaften, um die Dichtigkeit des Gehäuses sicherzustellen und um im Bedarfsfall die Polscheibe gegenüber dem übrigen Gehäuse elektrisch zu isolieren. Darüber hinaus ist der Klebstoff bevorzugt chemisch beständig gegenüber üblichen Elektrolytlösungen.

Besonders bevorzugt weist der Klebstoff eine Feuchtigkeitspermeation ähnlich oder besser der eines Polypropylen-Materials auf.

In solchen Fällen, in denen die Deckelplatte nicht aus einem metallischen, sondern aus einem Kunststoffmaterial gebildet ist, spielen die elektrisch isolierenden Eigenschaften des Klebstoffs eine untergeordnete Rolle. In einem solchen Fall wird eine elektrische Isolierung der Polscheibe gegenüber dem übrigen Gehäuse, insbesondere gegenüber dem becherförmigen Gehäuseteil, bereits durch das Kunststoffmaterial der Deckelplatte realisiert.

In bevorzugten Ausführungsformen des erfindungsgemäßen Energiespeicherelements zeichnet sich das Energiespeicherelement durch mindestens eines der folgenden zusätzlichen Merkmale aus:
a. Der Elektroden-Separator-Verbund umfasst mindestens eine Anode und mindestens eine Kathode, wobei die mindestens eine Anode oder die mindestens eine Kathode elektrisch mit der Polscheibe kontaktiert ist.
b. Der Elektroden-Separator-Verbund ist ein gestapelter Elektroden-Separator-Verbund.
c. Der Elektroden-Separator-Verbund ist ein gewickelter Elektroden-Separator-Verbund, insbesondere ein zylindrischer Wickel oder ein Flachwickel.
d. Das elektrochemische Energiespeicherelement ist eine Lithium-Ionen-Zelle.
e. Das elektrochemische Energiespeicherelement ist eine Natrium-lonen-Zelle.

Wenn die mindestens eine Anode elektrisch mit der Polscheibe verbunden ist, so ist die mindestens eine Kathode elektrisch mit dem Gehäusebecher und/oder der Deckelplatte verbunden. Wenn die mindestens eine Kathode elektrisch mit der Polscheibe verbunden ist, so ist die mindestens eine Anode elektrisch mit dem Gehäusebecher und/oder der Deckelplatte verbunden.

Die erfindungsgemäße Ausgestaltung des Deckelteils bzw. der entsprechenden Stirnseite eines Gehäuses für ein Energiespeicherelement eignet sich prinzipiell für verschiedene Arten von elektrochemischen Energiespeicherelementen. Als Elektroden-Separator-Verbund für diese Energiespeicherelemente können daher insbesondere gewickelte oder gestapelte Elektroden-Separator-Verbünde eingesetzt werden.

Auch im Hinblick auf die Elektrochemie ist die erfindungsgemäße Energiespeicherzelle nicht auf einen bestimmten Zellentyp beschränkt. In besonders bevorzugten Ausgestaltungen handelt es sich um Lithium-Ionen-Zellen, da solche Zellen eine besonders große Energiedichte bei vergleichsweise niedrigem Gewicht bereitstellen können. In anderen Ausführungsformen kann es sich beispielsweise um Natrium-lonen-Zellen handeln, die auf das rare Lithium verzichten.

Allgemein basieren Lithium-Ionen-Zellen oder allgemein Lithium-Ionen-Energiespeicherelemente auf dem Einsatz von Lithium, welches in Form von Ionen zwischen den Elektroden des Energiespeicherelements hin und her wandern kann.

Die negative Elektrode und die positive Elektrode eines Lithium-Ionen-Energiespeicherelements werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für Lithium-Ionen-Energiespeicherelemente kommen prinzipiell sämtliche Materialien in Frage, die Lithium-Ionen aufnehmen und wieder abgeben können. Für die negative Elektrode werden beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel Bestandteil einer Mixtur, die als Schicht auf einem bandförmige Stromkollektor aufgebracht ist. Der Stromkollektor stellt dabei eine elektrochemisch inaktive Komponente des Energiespeicherelements dar. Als Stromkollektoren sind insbesondere metallische Folien geeignet, die als Träger für das jeweilige Aktivmaterial dienen. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Die Schicht umfasst als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze. Der Elektrodenbinder gewährleistet die mechanische Stabilität der Elektroden und sorgt häufig auch für die Haftung des Aktivmaterials auf den Stromkollektoren.

Als Elektrolyten für Lithium-lonen-Zellen eignen sich vor allem Lösungen von Lithiumsalzen wie Lithiumhexafluorophosphat (LiPF₆) in organischen Lösungsmitteln (z. B. Ether und Ester der Kohlensäure).

Wenn die Elektroden in Form eines Wickels oder eines Stapels bereitgestellt werden, ist zwischen den Elektroden in der Regel ein Separator angeordnet, der beispielsweise ebenfalls in Bandform ausgebildet sein kann.

In weiteren Ausführungsformen kann es sich bei dem Energiespeicherelement auch um die bereits erwähnte Natrium-Ionen-Zelle oder eine Kalium-Ionen-Zelle, eine Calzium-Ionen-Zelle, eine Magnesium-Ionen-Zelle oder eine Aluminium-Ionen-Zelle handeln. Unter diesen Varianten sind Energiespeicherelemente mit Natrium-Ionen-Zellchemie besonders bevorzugt.

Bevorzugt umfasst ein Energiespeicherelement auf Basis von Natrium-Ionen einen Elektrolyten mit mindestens einem Lösungsmittel und mindestens einem Leitsalz.

Die Erfindung umfasst weiterhin ein Verfahren zur Herstellung des beschriebenen elektrochemischen Energiespeicherelements. Dieses Verfahren umfasst zumindest die folgenden Verfahrensschritte:
a. Zur Bereitstellung eines Deckelteils für das Gehäuse des elektrochemischen Energiespeicherelements werden eine scheibenförmige Deckelplatte mit einer Aussparung, die von einem Innenrand der Deckelplatte begrenzt wird, und eine metallische Polscheibe mit einem Außenrand bereitgestellt. Bevorzugt ist dabei die Fläche der Polscheibe kleiner als die von der zentralen Aussparung der Deckelplatte aufgespannte Fläche.
b. Die Polscheibe wird in der Aussparung der Deckelplatte fixiert, wobei ein Spalt zwischen dem Außenrand der Polscheibe und dem Innenrand der Deckelplatte mit einem Klebstoff ausgefüllt wird.
c. Es wird ein becherförmiges Gehäuseteil mit einer Öffnung bereitgestellt.
d. In das becherförmige Gehäuseteil wird mindestens ein Elektroden-Separator-Verbund eingebracht.
e. Eine der Elektroden des Elektroden-Separator-Verbunds wird elektrisch mit dem becherförmigen Gehäuseteil und/oder mit der Deckelplatte und die andere der Elektroden wird elektrisch mit der Polscheibe kontaktiert, in bevorzugten Ausführungsformen unter Verwendung von einem oder mehreren Ableiterstreifen und/oder einem oder mehreren Kontaktblechteilen.
f. Vor oder nach der elektrischen Kontaktierung der Elektroden wird die Öffnung des becherförmigen Gehäuseteils mit dem Deckelteil verschlossen.
g. Gegebenenfalls wird die im Gehäuse nach außen orientierte Oberfläche der Polscheibe zumindest teilweise zur Freimachung als elektrischer Kontakt von Klebstoff befreit.

Bei der Elektrode, die mit der Polscheibe kontaktiert wird, kann es sich beispielsweise um die Kathode handeln. Dementsprechend wird die Anode mit dem Gehäusebecher und/oder der Deckelplatte, die gegenüber der Polscheibe elektrisch isoliert ist, verbunden. Wenn die Anode ausschließlich oder zusätzlich mit der Deckelplatte elektrisch kontaktiert ist, hat dies den besonderen Vorteil, dass sowohl der positive als auch der negative Pol der Zelle auf einer Seite des Gehäuses von außen abgreifbar ist. Dies kann für verschiedene Anwendungen besondere Vorteile bieten. In entsprechender Weise kann auch die Anode mit der Polscheibe und die Kathode mit dem Gehäusebecher und/oder der Deckelplatte elektrisch kontaktiert sein.

Bei dem Klebstoff handelt es sich vorzugsweise um einen thermoplastischen Klebstoff. Der Klebestoff kann beispielsweise in dem zwischen der Polscheibe und der Deckelplatte gebildeten Spalt eingespritzt werden. Nach dem Erhärten bildet der Klebstoff eine stabile, dichte und vorzugsweise elektrisch isolierende Verbindung zwischen der Polscheibe und der Deckelplatte.

Für die Funktion des Energiespeicherelements ist es wichtig, dass die metallische Oberfläche der Polscheibe von außen zugänglich ist, so dass der Kontakt mit der jeweiligen Elektrode hergestellt werden kann. Um eine Verdeckung der metallischen Oberfläche durch überschüssigen Klebstoff zu vermeiden, kann im Rahmen der Fertigung die äußere Oberfläche der Polscheibe während der Verklebung beispielsweise abgedeckt werden. Alternativ oder zusätzlich kann überschüssiger Klebstoff nachträglich beispielsweise abgeschliffen oder auf andere Weise entfernt werden.

Das Verschließen der Öffnung des becherförmigen Gehäuseteils mit dem Deckelteil kann bevorzugt durch Verschweißen erfolgen, insbesondere durch Laser-Schweißen oder durch Widerstandsschweißen. Gegebenenfalls kann hierfür auch eine Verklebung vorgesehen sein, vor allem, wenn die Deckelplatte des Gehäuses aus Kunststoff gebildet ist.

Das becherförmige Gehäuseteil kann beispielsweise als Tiefziehteil aus vernickeltem Stahl, Aluminium oder Edelstahl bereitgestellt werden.

Bei der Herstellung der erfindungsgemäßen Energiespeicherelemente wird in der Regel entweder ein bereits mit einem Elektrolyten versehener Elektroden-Separator-Verbund verwendet, oder der Elektroden-Separator-Verbund wird im weiteren Verlauf der Herstellung mit einem Elektrolyten versetzt. Hierfür kann beispielsweise in dem Becherboden des becherförmigen Gehäuseteils eine Öffnung (Aktivierungsöffnung) vorgesehen sein, über die der Elektrolyt in das Innere des Gehäuses eingebracht wird. Nach dem Einbringen können diese Aktivierungs-öffnungen verschlossen werden, beispielsweise durch Kleben oder Schweißen.

Bei dem Material für das Gehäuse, insbesondere für den Gehäusebecher, handelt es sich vorzugsweise um Aluminium oder um eine Aluminiumlegierung. Auch die Polscheibe kann aus Aluminium oder einer Aluminiumlegierung gebildet sein. Vorzugsweise besteht auch die Deckelplatte aus Aluminium oder einer Aluminiumlegierung. In anderen Ausführungsformen können beispielsweise vernickelter Stahl oder Edelstahl für die Gehäuseelemente verwendet werden. Gegebenenfalls kann die Deckelplatte auch aus einem Kunststoffmaterial gebildet sein.

Die Deckelplatte hat vorzugsweise einen Durchmesser im Bereich von 5 mm bis 35 mm. Die Dicke der Deckelplatte liegt vorzugsweise im Bereich von 150 µm bis 300 µm. Bevorzugt besteht sie aus Edelstahl, Kupfer oder Nickel. Geometrie und Dimension der Aussparung richtet sich nach der Geometrie und Dimension der Polscheibe. Der Spalt zwischen der Polscheibe und dem Innenrand der Deckelplatte kann beispielsweise eine Breite im Bereich von 0.5 mm - 1mm aufweisen. Die Dicke der Polscheibe liegt vorzugsweise im Bereich von 150 µm bis 300 µm. Das bevorzugte Material für die Polscheibe ist Edelstahl, es kann aber auch Aluminium sein.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

In den Figuren zeigen:
- Fig. 1: schematische Schnittansicht einer bevorzugten Ausführungsform des Gehäuses eines erfindungsgemäßen Energiespeicherelements;
- Fig. 2: schematische Schnittansicht einer bevorzugten Ausführungsform eines erfindungsgemäßen Energiespeicherelements; und
- Fig. 3: fotografische Darstellung einer Aufsicht auf eine bevorzugte Ausführungsform eines Deckelteils als Bestandteil eines erfindungsgemäßen Energiespeicherelements.

### BESCHREIBUNG VON BEVORZUGTEN AUSFÜHRUNGSBEISPIELEN

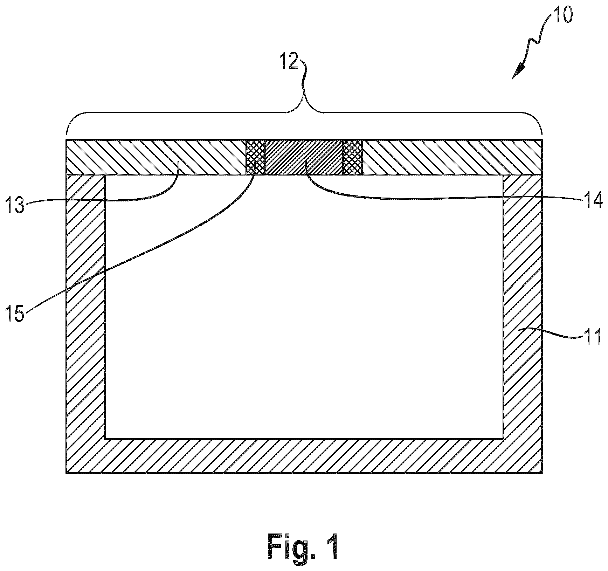

**Fig. 1** illustriert den prinzipiellen Aufbau einer bevorzugten Ausführungsform eines Gehäuses 10 eines erfindungsgemäßen Energiespeicherelements. In dieser Darstellung ist nur das Gehäuse 10 des Energiespeicherelements gezeigt, die Elektroden und weitere im Gehäuseinnern angeordnete funktionale Bestandteile sind nicht dargestellt.

Das Gehäuse 10 ist aus einem becherförmigen Gehäuseteil 11, das insbesondere ein metallisches Gehäuseteil ist, beispielsweise bestehend aus Aluminium, und einem Deckelteil 12, beispielsweise ebenfalls bestehend aus Aluminium, aufgebaut. Das Deckelteil 12 verschließt die Öffnung des becherförmigen Gehäuseteils 11. Es kann beispielsweise auf den Rand der Öffnung aufgeschweißt sein. Erfindungsgemäß umfasst das Deckelteil 12 eine scheibenförmige Deckelplatte 13. Die Deckelplatte 13 weist eine Aussparung auf, die in dieser Ausführungsform an zentraler Position liegt. In diese Aussparung ist die metallische Polscheibe 14, beispielsweise bestehend aus Edelstahl, Nickel oder Kupfer, eingelassen. Die Elemente des Deckelteils 12, also die Polscheibe 14 und die Deckelplatte 13, sind in einer Ebene angeordnet.

Zur Fixierung der Polscheibe 14 in der Aussparung ist ein umlaufender, mit Klebstoff versehener Spalt 15 vorgesehen. Neben einer fixierenden und abdichtenden Funktion des Klebstoffs erfüllt der Klebstoff auch eine elektrisch isolierende Funktion, so dass die Polscheibe 14 gegenüber der Deckelplatte 13 elektrisch isoliert ist.

Die metallische Polscheibe 14 kann beispielsweise mit der positiven Elektrode des hier nicht dargestellten Elektroden-Separator-Verbunds im Inneren des Gehäuses elektrisch kontaktiert sein. Die negative Elektrode kann insbesondere mit der Deckelplatte 13 und/oder dem becherförmigen Gehäuseteil 11 elektrisch kontaktiert sein.

In bevorzugten Ausführungsformen können sowohl der positive als auch der negative Pol auf der von dem Deckelteil 12 gebildeten Stirnseite des Gehäuses 10 liegen, so dass beide Pole auf dieser Seite des Energiespeicherelements abgreifbar sind.

Das Deckelteil 12 kann in verschiedenen Dicken realisiert werden und kann insbesondere auch sehr dünn hergestellt werden. Die Dicke der Polscheibe 14 entspricht vorzugsweise der Dicke der Deckelplatte 13.

Durch diese Ausbildung des Deckelteils steht im Vergleich mit herkömmlichen Lösungen mehr freier Innenraum des Gehäuses für die elektrochemisch aktiven Komponenten des Energiespeicherelements zur Verfügung, so dass Energiespeicherelemente mit höherer Energiedichte hergestellt werden können.

Die erfindungsgemäße Ausbildung des Gehäuses 10 ist für ganz verschiedene Arten von Energiespeicherelementen einsetzbar, insbesondere können Elektroden-Separator-Verbünde in gestapelter oder zylindrischer oder flach gewickelter Form in dem Gehäuse 10 verbaut werden.

In besonders bevorzugter Weise wird diese Art des Gehäuses für Knopfzellen eingesetzt. In diesen Ausführungsformen weist das Gehäuse 10 in der Regel eine zylindrische Form auf und das Deckelteil 12 hat einen runden oder ovalen Außenumfang. Darüber hinaus ist die erfindungsgemäße Ausbildung des Gehäuses jedoch auch für andere Formen von Energiespeicherelementen einsetzbar, beispielsweise für solche mit prismatischem Gehäuse.

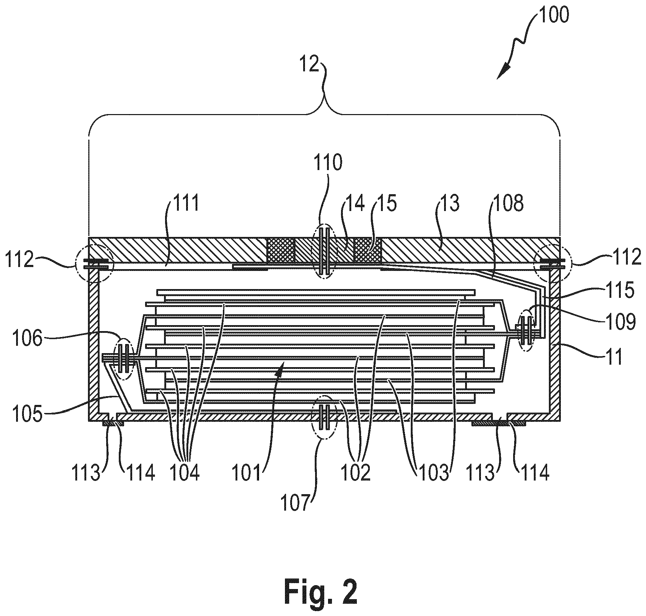

**Fig. 2** illustriert in schematischer Weise einen Querschnitt durch ein erfindungsgemäßes Energiespeicherelement 100, wobei dieses Energiespeicherelement mit einem gestapelten Elektroden-Separator-Verbund 101 ausgestattet ist. Das Gehäuse des Energiespeicherelements 100 ist aus einem becherförmigen Gehäuseteil 11 und einem Deckelteil 12 aufgebaut, wie es bereits anhand der Figur 1 erläutert wurde. Dabei umfasst das Deckelteil 12 eine scheibenförmige Deckelplatte 13 mit einer zentralen Öffnung, in die die metallische Polscheibe 14 eingelassen ist. Zwischen der Polscheibe 14 und dem Innenrand der Deckelplatte 13 liegt ein Spalt 15, der mit Klebstoff ausgefüllt ist. Bei dem Kleber kann es sich beispielsweise um Epoxidharz oder einen Acrylatkleber handeln.

Statt des hier gezeigten Elektroden-Separator-Verbunds 101 in Form eines Stapels kann der Elektroden-Separator-Verbund beispielsweise auch als zylindrischer Wickel oder als Flachwickel realisiert sein.

Der Stapel wird von den Anoden 102 und Kathoden 103 gebildet, die übereinandergestapelt und jeweils mit flächigen Separatoren 104 voneinander getrennt sind. Die Elektroden 102, 103 werden jeweils von einer Trägerfolie (Stromkollektorfolie) und einer Beschichtung mit einem elektrochemisch aktiven Material gebildet. Sie können im Fall einer Knopfzelle beispielsweise kreisförmig ausgebildet sein.

Als Trägerfolie für die Anoden 102 wird beispielsweise Kupfer- oder Nickelfolie verwendet. Als elektrochemisch aktives Material kann beispielsweise ein Aktivmaterial auf der Basis von Graphit, Silizium (Si), Lithiumtitaniumoxid (LTO) oder anderem eingesetzt werden. Die Trägerfolie für die Kathode ist beispielsweise aus Aluminium gebildet und als Aktivmaterial für die Kathode können beispielsweise Lithium-Nickel-Mangan-Cobalt-Oxide (NMC), Lithium-Cobalt-Oxide (LCO), Lithium-Nickel-Cobalt-Aluminium-Oxide (NCA), Lithiumeisenphosphate (LFP) oder anderes verwendet werden.

Nach der Stapelung der Elektroden 102 und 103 mit den dazwischen liegenden Separatoren 104 können beispielsweise unbeschichtete streifenförmige Fortsätze der Stromkollektorfolien der Anoden 102 miteinander verschweißt werden (beispielsweise über Widerstandsschweißen, Ultraschall oder Laser). Die Fortsätze können mit einem Anodenableiter 105 verschweißt werden, beispielsweise durch Widerstandschweißen, Ultraschall oder Laser (Verschweißung 106). Die beiden Verschweißungsschritte können auch in einem Schritt zusammengefasst werden.

Der Anodenableiter 105 wiederum kann mittels Widerstandsschweißen, Ultraschall oder Laser an das becherförmige Gehäuseteil 11 geschweißt werden (Verschweißung 107). Diese Verschweißung ist in dem hier illustrierten Ausführungsbeispiel im Bodenbereich des becherförmigen Gehäuseteils 11 vorgesehen.

Auf die gleiche Weise können unbeschichtete streifenförmige Fortsätze der Stromkollektorfolien der Kathoden 103 miteinander und mit einem Kathodenableiter 108 verschweißt werden (Verschweißung 109). Die Verschweißung der Kathodenstromkollektoren untereinander und die Verschweißung mit dem Kathodenableiter 108 kann ebenfalls sequentiell oder in einem Schritt erfolgen.

Der Kathodenableiter 108 wird von innen an die Polscheibe 14 angeschweißt (Verschweißung 110), wobei diese Verschweißung beispielsweise durch Widerstandsschweißen, Ultraschall oder Laser von innen oder von außen erfolgen kann.

Zur Vermeidung von Kurzschlüssen ist die Innenseite der Deckelplatte 13 mit einer Isolierungsscheibe 111 abgedeckt. Weiterhin ist der Kathodenableiter 108 zur elektrischen Isolierung gegenüber dem Gehäuse mit einem Isoliermittel 115, z. B. einer Isolierfolie, versehen.

Das becherförmige Gehäuseteil 11 wird im Bereich seiner oberen Öffnung mit dem Deckelteil 12 verschweißt (Schritt 112). Dies erfolgt vorzugsweise durch Laserstrahlung, die horizontal und/oder vertikal angesetzt werden kann.

Über die Aktivierungslöcher 113 im Bodenbereich des becherförmigen Gehäuseteils 11 kann das Innere des Gehäuses des Energiespeicherelements 100 mit einem Elektrolyten befüllt werden. Anschließend können die Aktivierungslöcher 113 beispielsweise mit einer Abdeckscheibe 114 oder Ähnlichem verschlossen werden. Der Verschluss kann beispielsweise mittels Kleben oder Schweißen (Ultraschall, Widerstand oder Laser) realisiert werden.

Aus der hier beschriebenen Anordnung und Kontaktierung der Elektroden resultiert ein Energiespeicherelement 100, bei dem das becherförmige Gehäuseteil 11 und die Deckelplatte 13 negativ gepolt und die Polscheibe 14 positiv gepolt sind.

Je nach Anordnung und Verschaltung der Elektroden kann die Polarität auch umgekehrt sein.

In weiteren Ausführungsformen kann beispielsweise die Deckelplatte 13 aus einem Kunststoffmaterial gebildet sein, so dass auf der Oberseite des Energiespeicherelements 100 nur die Polarität der Polscheibe 14 abgreifbar ist und ausschließlich das becherförmige Gehäuseteil 11 die andere Polarität trägt.

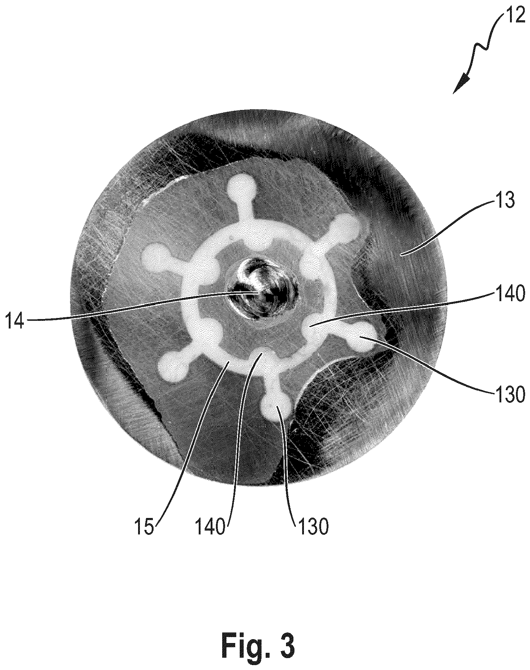

**Fig. 3** zeigt ein konkretes Ausführungsbeispiel eines Deckelteils 12 gemäß der Erfindung. Das Deckelteil 12 wird von der scheibenförmigen Deckelplatte 13, in diesem Beispiel eine metallische Deckelplatte, sowie der metallischen Polscheibe 14 gebildet, die über eine Klebstoffverbindung (mit Klebstoff gefüllter Spalt 15) in die Deckelplatte 13 eingelassen ist.

In diesem Ausführungsbeispiel weichen sowohl der Außenumfang der Polscheibe 14 als auch der Innenrand der Deckelplatte 13, der die zentrale Aussparung innerhalb der Deckelplatte definiert, von einer runden Form ab. In diesen Ausführungsbeispielen sind Einbuchtungen und hinterschnittene Bereiche vorhanden, die die Haftung des Klebers und die mechanische Verbindung zwischen der Polscheibe 14 und der Deckelplatte 13 verbessern.

Im Fall der Polscheibe 14 sind halbkreisförmige Einbuchtungen 140 im Bereich des Außenrandes der Polscheibe vorgesehen. Im Fall der Deckelplatte 13 sind hinterschnittene Einbuchtungen 130 in Kopfstielform vorgesehen. Die hinterschnittenen Einbuchtungen 130 werden von kreisförmigen Bereichen gebildet, die über einen schmalen Steg in die zentrale Aussparung der Deckelplatte 13 münden. Die Bereiche 130 und 140 erlauben eine besonders stabile Klebeverbindung zwischen dem Deckelplatte 13 und der Polscheibe 14.

In anderen möglichen Ausführungsformen können die Formen der Polscheibe 14 und der Aussparung der Deckelplatte 13 beispielsweise jeweils rund sein, so dass die Deckelplatte 13 als Donut und die Polscheibe 14 als runde Scheibe ausgebildet sind. Diese Ausgestaltung des Deckelteils ist insbesondere im Hinblick auf eine besonders einfache Fertigung vorteilhaft.

Um die metallische Oberfläche der Polscheibe 14 für die elektrische Kontaktierung von außen frei zugänglich zu machen, kann es gegebenenfalls erforderlich sein, im Zuge der Herstellung des Deckelteils übergelaufenen Klebstoff nachträglich zu entfernen, beispielsweise durch einen Schleifprozess. Eine andere Möglichkeit ist eine Abdeckung der Polscheibe 14 oder von Teilen der Polscheibe 14 während des Klebeprozesses, so dass die metallische Oberfläche der Polscheibe 14 nicht mit Klebstoff benetzt wird.

## Patentansprüche

1. Elektrochemisches Energiespeicherelement (100), insbesondere in Form einer Knopfzelle, mit einem Gehäuse (10) und mit mindestens einem innerhalb des Gehäuses angeordneten Elektroden-Separator-Verbund (101), wobei das elektrochemische Energiespeicherelement die folgenden Merkmale aufweist:
a. Das Gehäuse umfasst ein becherförmiges Gehäuseteil (11) mit einer Öffnung sowie ein Deckelteil (12), das die Öffnung verschließt;
b. das Deckelteil (12) umfasst
iii. eine scheibenförmige Deckelplatte (13) mit einer Aussparung, die von einem Innenrand der Deckelplatte begrenzt wird, und
iv. eine metallische Polscheibe (14) mit einem Außenrand;
c. die Polscheibe (14) ist in der Aussparung der Deckelplatte (13) fixiert und zwischen dem Außenrand der Polscheibe und dem Innenrand der Deckelplatte befindet sich ein Spalt (15), der mit einem Klebstoff ausgefüllt ist.

2. Elektrochemisches Energiespeicherelement nach Anspruch 1 mit dem folgenden zusätzlichen Merkmal:
a. Der Klebstoff hat elektrisch isolierende Eigenschaften.

3. Elektrochemisches Energiespeicherelement nach Anspruch 1 mit mindestens einem der folgenden zusätzlichen Merkmale:
a. Die Fläche der Polscheibe (14) ist kleiner als die von der Aussparung der Deckelplatte (13) aufgespannte Fläche.
b. Der Länge des Außenrands der Polscheibe (14) ist kleiner als die Länge des Innenrands der Deckelplatte (13).

4. Elektrochemisches Energiespeicherelement nach Anspruch 1 oder Anspruch 2 mit mindestens einem der folgenden zusätzlichen Merkmale:
a. Der Außenrand der Polscheibe (14) weist eine Kreisform auf;
b. der Innenrand der Deckelplatte (13) weist eine Kreisform auf.

5. Elektrochemisches Energiespeicherelement nach einem der vorhergehenden Ansprüche, insbesondere nach Anspruch 1 oder Anspruch 2, mit mindestens einem der folgenden zusätzlichen Merkmale:
a. Der Außenrand der Polscheibe (14) weist eine von einer Kreisform abweichende Form auf;
b. der Innenrand der Deckelplatte (13) weist eine von einer Kreisform abweichende Form auf.

6. Elektrochemisches Energiespeicherelement nach einem der vorhergehenden Ansprüche mit dem folgenden zusätzlichen Merkmal:
a. Auf der Außenseite des Deckelteils (12) ist der Übergang von der Deckelplatte (13) zu der Polscheibe (14) fließend.

7. Elektrochemisches Energiespeicherelement nach einem der vorhergehenden Ansprüche, insbesondere nach Anspruch 5, mit dem folgenden zusätzlichen Merkmal:
a. Auf der Innenseite des Deckelteils (12) ist der Übergang von der Deckelplatte (13) zu der Polscheibe (14) fließend.

8. Elektrochemisches Energiespeicherelement nach einem der vorhergehenden Ansprüche mit dem folgenden zusätzlichen Merkmal:
a. Die Innenseite des Deckelteils (12) ist zumindest teilweise mit einer Folie abgeklebt.

9. Elektrochemische Energiespeicherelement nach Anspruch 7 mit mindestens einem der folgenden zusätzlichen Merkmale:
a. Die Folie deckt den Innenrand der Deckelplatte (13) und den Außenrand der Polscheibe (14) ab, so dass der in dem Spalt zwischen dem Innenrand und dem Außenrand angeordnete Klebstoff vor einem Kontakt mit einem Elektrolyten im Inneren des Gehäuses geschützt ist.
b. Die Folie hat eine Ringform.

10. Elektrochemisches Energiespeicherelement nach einem der vorhergehenden Ansprüche mit mindestens einem der folgenden zusätzlichen Merkmale:
a. Der Klebstoff ist ein Epoxidharz.
b. Der Klebstoff ist ein Acrylatkleber.
c. Der Klebstoff ist ein Cyanacrylatkleber.
d. Der Klebstoff ist ein Zweikomponentenkleber.

11. Elektrochemisches Energiespeicherelement nach einem der vorhergehenden Ansprüche mit mindestens einem der folgenden zusätzlichen Merkmale:
a. Der Elektroden-Separator-Verbund (101) umfasst mindestens eine Anode (102) und mindestens eine Kathode (103), wobei die mindestens eine Anode oder die mindestens eine Kathode elektrisch mit der Polscheibe (14) kontaktiert ist.
b. der Elektroden-Separator-Verbund (101) ist ein gestapelter Elektroden-Separator-Verbund.
c. der Elektroden-Separator-Verbund ist ein gewickelter Elektroden-Separator-Verbund.
d. das elektrochemische Energiespeicherelement (100) ist eine Lithium-Ionen-Zelle.
e. das elektrochemische Energiespeicherelement (100) ist eine Natrium-Ionen-Zelle.

12. Verfahren zur Herstellung eines elektrochemischen Energiespeicherelements (100), insbesondere in Form einer Knopfzelle, mit einem Gehäuse (10) und mit mindestens einem innerhalb des Gehäuses angeordneten Elektroden-Separator-Verbund (101) nach einem der Ansprüche 1 bis 11, umfassend die folgenden Verfahrensschritte:
a. Zur Bereitstellung eines Deckelteils (12) für das Gehäuse des elektrochemischen Energiespeicherelements werden eine scheibenförmige Deckelplatte (13) mit einer Aussparung, die von einem Innenrand der Deckelplatte begrenzt wird, und eine metallische Polscheibe (14) mit einem Außenrand bereitgestellt.
b. Die Polscheibe (14) wird in der Aussparung der Deckelplatte (13) fixiert, wobei ein Spalt (15) zwischen dem Außenrand der Polscheibe und dem Innenrand der Deckelplatte mit einem Klebstoff ausgefüllt wird.
c. Es wird ein becherförmiges Gehäuseteil (11) mit einer Öffnung bereitgestellt.
d. In das becherförmige Gehäuseteil (11) wird mindestens ein Elektroden-Separator-Verbund (101) eingebracht.
e. Eine der Elektroden des Elektroden-Separator-Verbunds (101) wird elektrisch mit dem becherförmigen Gehäuseteil (11) und/oder mit der Deckelplatte (13) und die andere der Elektroden wird elektrisch mit der Polscheibe (14) kontaktiert.
f. Vor oder nach der elektrischen Kontaktierung der Elektroden wird die Öffnung des becherförmigen Gehäuseteils (11) mit dem Deckelteil (12) verschlossen.
g. Gegebenenfalls wird die im Gehäuse nach außen orientierte Oberfläche der Polscheibe (14) zumindest teilweise zur Freimachung als elektrischer Kontakt von Klebstoff befreit.

13. Verfahren nach Anspruch 12 mit dem folgenden zusätzlichen Verfahrensschritt:
a. Das Verschließen der Öffnung des becherförmigen Gehäuseteils (11) mit dem Deckelteil (12) erfolgt durch Verschweißen, insbesondere durch Laser-Schweißen.

14. Verfahren nach Anspruch 12 oder Anspruch 13 mit dem folgenden zusätzlichen Merkmal:
a. Der Elektroden-Separator-Verbund (101) wird mit einem Elektrolyten versetzt.
